# EUROPEAN PATENT APPLICATION

(11) **EP 1 976 311 A1**
(43) Date of publication of application: **01.10.2008**
(21) Application number: 07701991.7
(22) Date of filing: 08.01.2007
(51) Int. Cl.: H04Q 7/22

(54) **METHOD FOR SENSING THE PUBLIC USER IDENTITY IN THE SERVICE PROFILE IN THE COMMUNICATION SYSTEM AND THE APPARATUS THEREOF**

(30) Priority: 10.01.2006 CN 200610005540
(71) Applicant: Huawei Technologies Co., Ltd., Longgang District Shenzhen 518129 (CN)
(72) Inventor: ZHU, Fenqin, Guangdong 518129 (CN); HE, Xiaoyan, Guangdong 518129 (CN)
(74) Representative: Casalonga, Axel
(86) International application number: PCT/CN2007/000059
(87) International publication number: WO 2007/079673

(57) **Abstract**

A method and device for being aware of public user identity of Service Profile in communication system, includes: sending, by a Service Profile storage entity, at least one public user identity which is contained in Service Profile information stored in the Service Profile storage entity and is linked to a same Service Profile; and obtaining, by an entity communicating with the Service Profile storage entity, the at least one public user identity linked to the same Service Profile from the Service Profile storage entity. The technical solution provided by embodiments of the present invention can guarantee that the S-CSCF, AS and UE are aware of the public user identities linked to the same Service Profile according to the method for dividing users based on the Service Profile, so as to implement the further related operational processing according to the public user identities linked to the same Service Profile.

## Description

### Field of the Invention

The present invention relates to network communication technologies, and particularly, to a scheme for being aware of public user identities linked to a same Service Profile in a communication system.

### Background of the Invention

With the development of broadband networks, mobile communications go beyond conventional voice communication. In combination with such data services as presence service, short messaging service, WEB browsing, positioning information, PUSH service and file sharing, the mobile communications can provide services of multiple media types, such as audio, video, picture and text, to meet various demands of a user.

Under the promotion of various applications, 3rd Generation Partnership Project (3GPP) and 3rd Generation Partnership Project 2 (3GPP2) successively put forward IP Multimedia Subsystem (IMS) architecture, aiming to provide a standard open structure to perform various multimedia applications in mobile networks so as to provide the user with more choices and richer experiences.

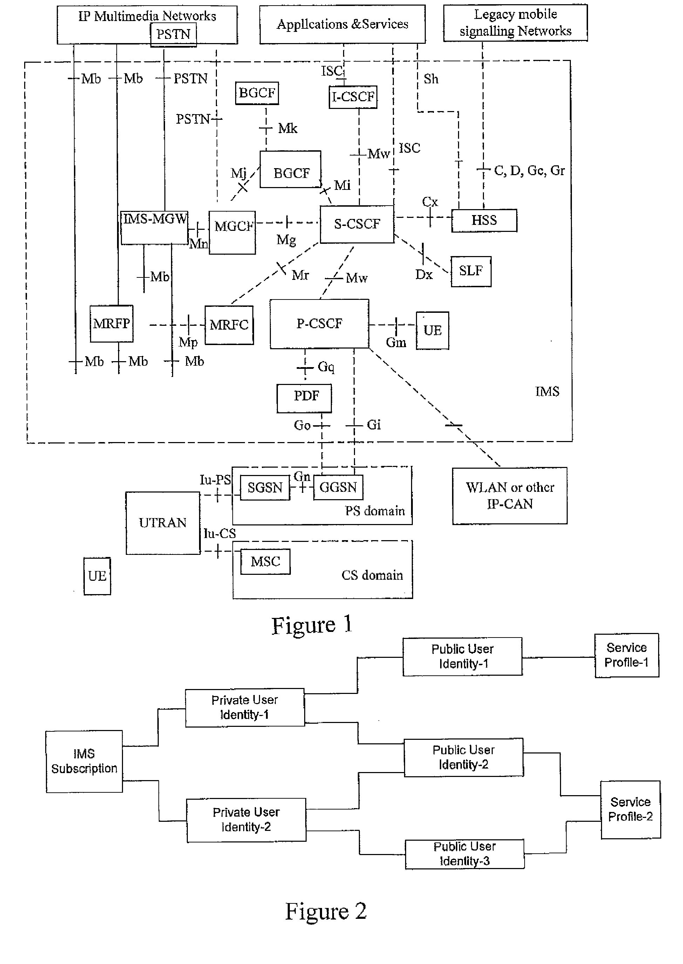

As shown in Figure 1, the IMS architecture is overlapped on the Packet-Switched Domain (PS Domain) network, and entities linked to the security function in the IMS architecture include a Call Session Control Function entity (CSCF) and a function entity of Home Subscriber Server (HSS).

The CSCF may include Serving-CSCF (S-CSCF), Proxy-CSCF (P-CSCF) and Interrogating-CSCF (I-CSCF), which may be different physical devices or different function modules in one physical device.

The S-CSCF is a service switch center of the IMS, adapted to perform session control, maintain a session status, manage user information and generate charging information.

The P-CSCF is an access point for user equipment to access the IMS, and is adapted to perform user registration, Quality of Service (QoS) control and security management.

The I-CSCF is adapted to perform the interaction between the IMS domains, manage the assignment of the S-CSCF, hide the internal network topology and configuration information and generate the charging data.

The function entity of HSS is a very important user database, adapted to support each network entity to process a call and a session.

In the IMS network, the subscription data of a user are stored in a network device where the HSS is located. The HSS provides an interface to the external to maintain user data (adding, modifying and deleting the subscription data of a user), and supports the download of the user data through a Cx interface (between the HSS and the I-CSCF/S-CSCF) and an Sh interface (between the HSS and the AS). When a user performs the network registration, the registered message is transferred to the Home Location Register (HLR)/HSS from which the subscription data of the user are downloaded for the subsequent service operation.

At present, in the protocols for the IMS, user identities transferred between network entities include IMS Private User Identity (IMPI), IMS Public User Identity (IMPU), Mobile Station PSTN/ISDN number (MSISDN) and International Mobile Station Identity (IMSI). Such user identities are subscribed and stored into the HSS via the interface; a user obtains the subscription data from the HSS according to a user identity if the user needs to perform the related service operation.

In the IMS, the relationship between user identities is complex. As shown in Figure 2, the relationship between the user identities includes the following in terms of the logical relationships.
(1) One IMS Subscription Identity (SUBID) may include multiple IMPIs;
(2) One IMPI belongs to only one SUBID;
(3) One IMPI may be linked to multiple IMPUs; and
(4) One IMPU may be associated with multiple IMPIs.

In other words, the SUBID has a one-to-multiple relationship with the IMPI while the IMPI has a multiple-to-multiple relationship with the IMPU.

In the HSS, the user identities are elements of the Service Profile information. The Service Profile is a set of user subscription information stored in the HSS permanently, and includes user subscription data linked to the service, i.e. the Service Profile corresponds to the service.

The Service Profile information may be transferred from the HSS to the allocated S-CSCF through two user data processing operations. The two user data processing operations include Server Allocation Answer (SAA) and Push Profile Request (PPR). The Service Profile information is contained in a Diameter (Attribute Value Pair) AVP cell and described by an Extensible Markup Language (XML) document.

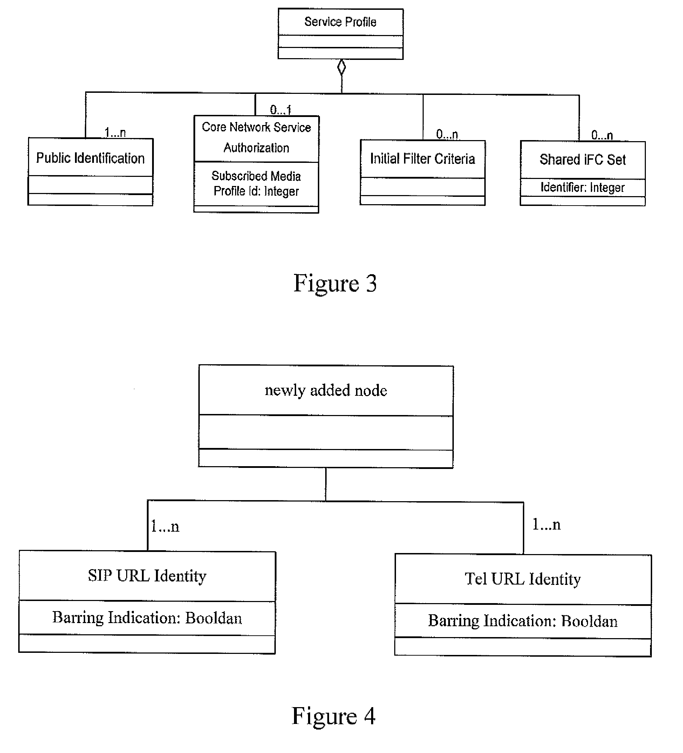

As shown in Figure 3, the Service Profile may include public identification, core network service authorization, initial Filter Criteria (iFC) and shared iFC, which are described respectively below.

### First, the public identification

The public identification includes public user identities linked to the Service Profile; the public user identities may be Session Initiation Protocol Uniform Resource Identifier (SIP URI) or Telecom URI; each public user identity contains a related barring indication. If the barring indication is set, the S-CSCF will prevent the public user identity from being used for any other IMS communications except registration and de-registration. As shown in Figure 2, the public identification linked to the Service Profile has no necessary relationship with the implicit register set; the public identification belonging to the same implicit register set may be linked to different Service Profiles; the public user identities belonging to the same implicit register set have the same registration state at any time, i.e. the registration and de-registration of one public user identity belonging to the implicit register set means the registration and de-registration of the other public user identities belonging to the implicit register set.

### Second, the core network service authorization

The core network service authorization contains media strategy information. The media strategy information includes one integer for identifying a subscribed media profile in the S-CSCF, such as an allowed Session Description Protocol (SDP) parameter. The media strategy information enables the operator to define different user profiles in the IMS network of the operator.

### Third, the iFC

The iFC includes service trigger information indicated in the initial filter criteria format, and is adapted to describe when to route the received SIP message to a special application server.

### Fourth, the shared iFC

In order to share a new characteristic defined by the iFC between multiple Service Profiles, only the integer indicating the shared iFC may be transferred between the HSS and the S-CSCF during data download if the HSS and the S-CSCF both support the new characteristic defined by the iFC. Therefore, the storage space of the HSS is saved and the usage of Cx reference point is optimized.

In the conventional solution, the HSS can be aware of the public user identity information linked to the same Service Profile in the same IMS Subscription (IMS subscription relationship). Moreover, while requesting downloading user data from the HSS through the SAR request, the S-CSCF server assigned to the user may also be aware of which public user identities of the same implicit register set of the same IMS Subscription are linked to the same Service Profile according to the user data, but the S-CSCF server is unable to be aware of the public user identities linked to the same Service Profile but not belonging to the same implicit register set. The AS server and the UE providing the user with value-added services in the network are unable to be aware of which public user identities are linked to the same Service Profile.

For example, the data format sent by the HSS to the S-CSCF in the SAA may be indicated as follows:

```
 <?xml aversion="1.0" encoding="UTF-8"?>
 <IMSSubscriptionxmlns:xsi="http://www.w3.org/2001/XMLSchema-instance"
 xsi:noNamespaceSchemaLocation="D:\\CxDataType.xsd">
      <PrivateID>IMPI1@homedomain.com</PrivateID> /private user identity is
                      IMPI1@homedomain.com
       <Service Profile>                                   //Service Profile
 starts
            <Publicldentity>
                <BarringIndication>1</BarringIndication>
                <Identity> sip:IMPU1@homedomain.com </Identity>
                </PublicIdentity>                        //public user identity is
            sip:IMPU1@homredomain.com, and is barring
            <PublicIdentity>
                <Identity> sip:IMPU2@homedomain.com </Identity>
            </PublicIdentity> //public user identity is sip:IMPU2@homedomain.com, and is
 not barring
            <InitialFilterCriteria>                              //initial filter criteria starts
                <Priority>0</Priority>               //priority
                <TriggerPoint>
                    <ConditionTypeCNF> 1 </ConditionTypeCNF>
                    <SPT>                           //service trigger point starts
                         <ConditionNegated>0</ConditionNegated>
                         <Group>0</Group>
                         <Method>INVITE</Method>       //trigger via the INVITE
                    </SPT>
                    <SPT>
                         <ConditionNegated>0</ConditionNegated>
                         <Group>0</Group>
                         <Method>MESSAGE</Method>        //trigger via the MESSAGE
                    </SPT>
                    <SPT>
                         <ConditionNegated>0</ConditionNegated>
                         <Group>0</Group>
                         <Method>SUBSCRIBE</Method>       //trigger via the SUBSCRIBE
                    </SPT>                       //service trigger point ends
                </TriggerPoint>
                <ApplicationServer>
                    <ServerName>sip:AS1@homedomain.com</ServerName>
                    <DefaultHandling>0</DefaultHandling>
                </ApplicationServer> //application server is sip:AS1@homedomain.com,
 default processing is call end while there is no response
           </InitialFilterCriteria>
       </<Service Profile>               //description of the Service Profile is completed
 </IMSSubscription>           //description of the subscription is completed
```

By the above data, the S-CSCF may determine that IMPU1@homedomain.com and IMPU2@homedomain.com are linked to the same Service Profile. However, in the above existing solution, the Application Server (AS), User Equipment (UE) and S-CSCF are all unable to be aware of or to completely be aware of the public user identity of the same IMS Subscription linked to the same Service Profile. In this way, it is impossible to perform the same processing for the public user identities linked to the same Service Profile in a special case defined by the user.

For example, in Figure 2, if the IMPU1 is used for daily personal contact out of the job range, it belongs to the same implicit register set as the IMPU2 but has one individual Service Profile. The IMPU2 and IMPU3 are used for job contact and have the same Service Profile. Because the IMPU2 and IMPU3 are used for job contact, the user may hope that all operations for these two IMPUs are the same, for example the processing for calling and called terminal, Do-not-Disturb Service and forwarding address information keeps the same synchronously. The process of a user modifying the subscription data of the IMPU2 via a terminal is also applicable to the IMPU3.

However, because the AS, UE and S-CSCF are unable to be aware of or to be completely aware of the IMPU information of one user belonging to one Service Profile currently, the AS is unable to determine whether to perform the same process for the IMPUs in the above applications, such as whether the AS needs to send the same message to the IMPU3 while sending a message to the IMPU2, or whether the UE needs to send the information once or repeatedly while modifying the forward information. Therefore, the AS and UE need to be aware of the IMPU information linked to the same Service Profile, so that the operation for one IMPU may also be linked to the other related IMPUs.

However, there is no technical solution provided in the current industry for the AS, UE and S-CSCF to be aware of the IMPU information belonging to the same Service Profile.

### Summary of the Invention

Embodiments of the present invention provide a method and system for being aware of a public user identity of Service Profile in the communication system, so as to guarantee that the AS, UE and S-CSCF may be aware of the public user identity information belonging to the same Service Profile in the communication system, thereby facilitating the use of a further processing manner.

Embodiments of present invention provide a method for being aware of the public user identity of Service Profile in the communication system, including:
in the communication network providing multimedia services, sending, by a Service Profile storage entity, at least one public user identity stored in the Service Profile storage entity and linked to a same Service Profile; and
obtaining, by an entity communicating with the Service Profile storage entity, the at least one public user identity linked to the same Service Profile from the Service Profile storage entity.

Embodiments of present invention provide a device for being aware of the public user identity of Service Profile in the communication system; the device is arranged in the communication network providing multimedia services and includes:
a Service Profile information storage unit, adapted to store Service Profile information;
a public user identity transmission unit, adapted to transmit at least one public user identity which is contained in the Service Profile information stored in the Service Profile information storage unit and is linked to a same Service Profile to an entity communicating with the Service Profile storage entity.

Embodiments of present invention provide a device for being aware of the public user identity of Service Profile in the communication system; the device is arranged in the communication network providing multimedia services and includes:
a public user identity receiving unit, adapted to receive information sent by a Service Profile storage entity, the information containing at least one public user identity linked to the same Service Profile.

Embodiments of present invention provide a system for being aware of the public user identity of Service Profile in the communication system, including:
a Service Profile information storage unit, adapted to send at least one public user identity which is contained in Service Profile information stored in the Service Profile information storage unit and is linked to the same Service Profile;
an entity communicating with the Service Profile storage entity, adapted to receive the information containing at least one public user identity linked to the same Service Profile,

As can be seen from the above technical solution provided in embodiments of the present invention, it can be guaranteed that the S-CSCF, AS and UE are aware of the public user identities linked to the same Service Profile according to the method for dividing users according to the Service Profile, so as to implement the further relevant operation processing according to the public user identities linked to the same Service Profile, for example, to perform the same service operation for the public user identities linked to the same Service Profile, thereby satisfying the flexible requirements of users and operators.

### Brief Description of the Drawings

Figure 1 is a schematic diagram of a structure of an IMS system;
Figure 2 is a schematic diagram of a relationship between IMS user identities;
Figure 3 is a schematic diagram of a conventional structure of a Service Profile;
Figure 4 is a schematic diagram of a structure of a newly-added node in accordance with an embodiment of the present invention;
Figure 5 is a first schematic diagram of an IMS subscription relationship in accordance with an embodiment of the present invention;
Figure 6 is a second schematic diagram of an IMS subscription relationship in accordance with an embodiment of the present invention;
Figure 7 is a first schematic diagram of shared IMPU in accordance with an embodiment of the present invention;
Figure 8 is a second schematic diagram of shared IMPU in accordance with an embodiment of the present invention;
Figure 9 is a third schematic diagram of an IMS subscription relationship in accordance with an embodiment of the present invention;
Figure 10 is a fourth schematic diagram of an IMS subscription relationship in accordance with an embodiment of the present invention;
Figure 11 is a fifth schematic diagram of an IMS subscription relationship in accordance with an embodiment of the present invention; and
Figure 12 is a schematic diagram of a structure of a system in accordance with an embodiment of the present invention.

### Detailed Description of the Invention

Embodiments of the present invention provide a method for including public user identities into one group according to the Service Profile and for the AS, S-CSCF and UE to be aware of public user identities in the one group. Therefore, the AS, S-CSCF and UE can perform corresponding processing for the aware public user identities linked to the same Service Profile, for example, perform the uniform service logic.

According to an embodiment of the present invention, the method mainly includes: sending, by a Service Profile storage entity, the public user identities linked to the same Service Profile to an entity communicating with the Service Profile storage entity; obtaining, by the entity communicating with the Service Profile storage entity, the public user identities linked to the same Service Profile from the Service Profile storage entity. The Service Profile storage entity may be an HSS in the IMS system; the entity communicating with the Service Profile storage entity may include at least one of the S-CSCF and the AS in the IMS system, or other entities with similar functions.

In the subsequent description, embodiments of the present invention will be hereinafter described in detail by taking the HSS as the Service Profile storage entity, and taking at least one of the S-CSCF and the AS as the entity communicating with the HSS which needs to obtain the public user identities linked to the same Service Profile.

In the IMS system, the S-CSCF, the AS and the UE all wish to obtain the public user identity information linked to the same Service Profile which is saved in the HSS. The corresponding implementation schemes for the above three entities to obtain the corresponding information are respectively provided as follows:
(1) The S-CSCF may directly obtain the corresponding public user identity information linked to the same Service Profile by information interaction with the HSS;
(2) The AS may directly obtain the corresponding public user identity information linked to the same Service Profile by information interaction with the HSS, or obtain the corresponding public user identity information by communicating with the S-CSCF after the S-CSCF obtains the corresponding public user identity information;
(3) The UE obtains the corresponding public user identity information by communicating with the S-CSCF after the S-CSCF obtains the corresponding public user identity information.

The above three processes of obtaining the public user identity information linked to the same Service Profile by the three entities may be implemented by a dedicated message or by extending an existing message. The processes implemented by extending an existing message can be compatible with the existing communication process well. The embodiments may be hereinafter described supposing that the processes are implemented by extending an existing message.

For further understanding of the present invention, the above three processes of the entity to be aware of the public user identities linked to the same Service Profile are explained here in detail with reference to accompanying drawings.

First, the process of the S-CSCF to be aware of the public user identities linked to the same Service Profile

To enable the S-CSCF to obtain the public user identity information linked to the same Service Profile from the HSS, the HSS extends the existing XML Schema (meta-markup language specification) while organizing the Service Profile data transferred via the Cx interface, and introduces one new node in the XML text transferred via the Cx interface. Furthermore, one Service Profile may include only one new node at most, the new node may include one or more public user identities. As shown in Figure 4, the UML structure of the new node includes at least one SIP URL identity and at least one Tel URL identity.

The process of the S-CSCF to be aware of the public user identities linked to the same Service Profile includes: sending, by the S-CSCF, a request, and sending, by the HSS, the public user identity information linked to the same Service Profile to the S-CSCF according to the request; or notifying, by the HSS, the S-CSCF when the public user identity information linked to the same Service Profile to be aware by the S-CSCF is changed, for example notifying the S-CSCF of the corresponding change according to the subscription of the S-CSCF.

### (1) The process of the S-CSCF to be aware of the public user identities linked to the same Service Profile from the HSS according to the request of the S-CSCF

The HSS needs to send an SAA message containing the newly added node to the S-CSCF while processing the Server Allocation Request (SAR) command sent by the S-CSCF. Therefore, the public identification linked to the same Service Profile is sent to the S-CSCF.

In the newly added node, there are the public user identities linked to the same Service Profile as that contained in the SAR request not belonging to the same implicit register set, i.e. all public user identities linked to the same Service Profile are contained in the sent SAA message while the public user identities of corresponding implicit register set are saved in the public identity node.

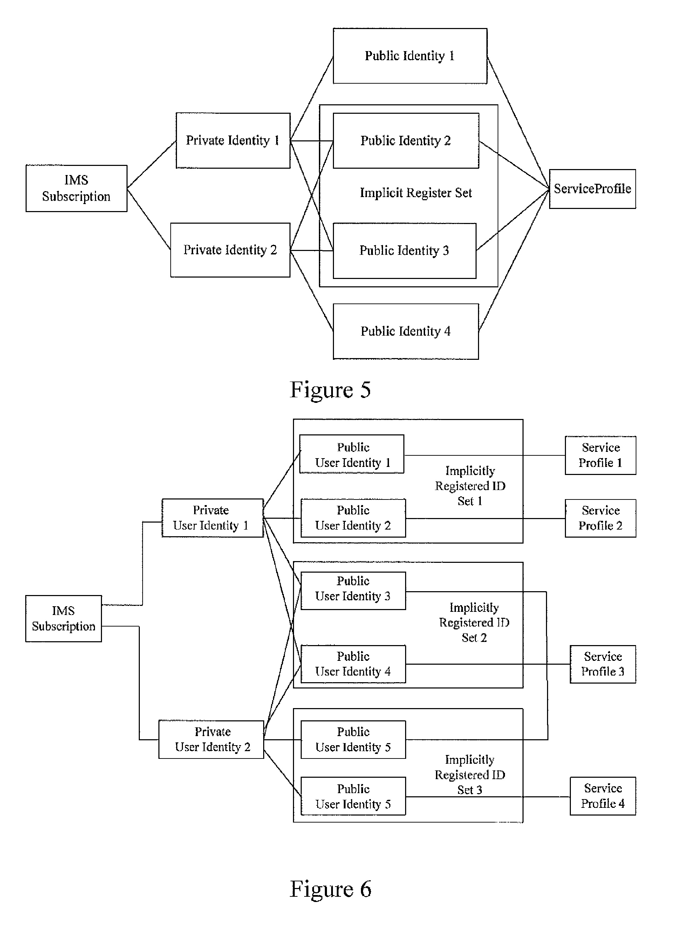

All public user identities linked to the same Service Profile but not belonging to the same implicit register set or all public user identities further belonging to the same private user identity may be contained in the SAA message sent to the S-CSCF, that is:
(11) If the newly added node is required to include only the IMPUs linked to the same Service Profile and the same private user identity as the public identification in the SAR request and not belonging to the same implicit register set as the public identification in the SAR request, then the HSS needs to further filter the corresponding public user identity information, and only the public user identity meeting the condition can be added to the SAA message;
   As shown in Figure 5, if Public Identity 2 or Public Identity 3 uses Private Identity 1 to initiate the registration, the public user identity contained in the newly added node of the Service Profile downloaded by the HSS during the SAR processing is Public Identity 1;
   It should be noted that, if the SAR request contains no private user identity and the public user identity contained therein is a SharedIMPU, for example IMPU2 (Public Identity2) and IMPU3 (Public Identity3) as shown in Figure 5, the HSS randomly selects a public user identity linked to the private user identity and sends the selected the public user identity contained in the Service Profile of the SAA to the S-CSCF;
   For example, if IMPU2, serving as UnregisterUser, downloads data from the HSS, the HSS may send Public Identity 1 or Public Identity 4 of the Service Profile randomly.
(12) If the newly added node contains the public user identities linked to the same Service Profile as the public identification in the request but not belonging to the same implicit register set as the public identification in the SAR request, the HSS adds into the returned message all the public user identities linked to the same Service Profile as the public user identity contained in the SAR request but not belonging to the same implicit register set as the public user identity contained in the SAR request;
   As shown in Figure 5, if Public Identity 2 or Public Identity 3 uses Private Identity 1 to initiate the registration, the public user identities contained in the newly added node of the Service Profile downloaded by the HSS during the SAR processing is Public Identity 1 and Public Identity 4.

As can be seen from the above description, the S-CSCF server allocated to the user may download user data from the HSS through sending an SAR request and receiving the SAA message sent by the HSS, and particularly, determines all public user identity information linked to the same Service Profile according to both the public user identity contained in the Public Identity node of the Service Profile and the public user identity contained in the newly added node.

Besides the above processing manners (11) and (12), the HSS may also send the public user identity information linked to the same Service Profile and belonging to the same implicit register set to the entity communicating with the HSS.

### (2) The process of the S-CSCF to be aware of the corresponding information according to a message initiatively sent by the HSS

If the public user identity linked to the same Service Profile in the HSS is changed and if the HSS determines that it is necessary to notify the S-CSCF to perform the data synchronization modification, the HSS needs to send a Push-Profile-Request (PPR) containing the newly added node to the S-CSCF. Upon receiving the PPR, the S-CSCF overlaps the Service Profile data of the public user identity contained in the PublicIdentity node of the Service Profile with the data contained in the PPR, thereby obtaining the latest public user identity information linked to the same Service Profile.

The above determination performed by the HSS includes:
(21) In the case that the public user identities linked to the same Service Profile in the HSS are changed, for example the Service Profile linked to these public user identities is changed to another, or the public user identity moves out of an implicit register set or joins a different implicit register set but is still linked to the same Service Profile, if such public user identities are all in the NotRegistered state, the HSS need not send a PPR request to the S-CSCF; otherwise, it is necessary to send a PPR request to notify the S-CSCF to perform the data synchronization modification.
(22) In the case that the change of the public identification in the Service Profile requires the synchronization of the S-CSCF, and that the change of the public identification does not relate to the change of the implicit register set but only relate to the change of the Service Profile linked to the public user identity of the same implicit register set, the HSS needs to send to each group of implicit register sets a PPR request to perform the data update. More particularly, the public user identity is deleted from the original implicit register set and added into a new implicit register set. It should be noted that, the deletion operation needs to be completed before the adding operation.
   The newly added node of the Service Profile of the PPR request contains the public user identities linked to the same Service Profile but not belonging to the same implicit register set as the public identification of PublicIdentity node at present.
   As shown in Figure 6, the Service Profile linked to IMPU4 is modified as Service Profile 2 but still belongs to the same implicit register set as IMPU3, and the HSS needs to send a PPR request to delete IMPU4 from the public user identity set linked to IMPU5 first, send a PPR request to add IMPU4 into the public user identity set linked to IMPU2, and send two PPR requests to update the Service Profile of IMPU4 which is respectively linked to IMP11 and IMPI2 lastly.
(23) In the case that the change of public identification of the Service Profile needs the synchronization of the S-CSCF and such change of public identification relates to the change of the implicit register set, i.e. the public user identities contained in the implicit register set are changed and the Service Profile linked to such public user identities is also changed, the HSS should notify the S-CSCF to perform the data synchronization modification for each group of implicit register sets according to the following:
   performing the modification of the implicit register sets, and
   performing the modification of public user identities linked to the same Service Profile, where the modification should also comply with the principle in (22) of deleting before adding and be performed through multiple PPR requests.

Second, the process of the AS to be aware of the public user identities linked to the same Service Profile

The process of the AS to be aware of the public user identities linked to the same Service Profile is described as follows. The AS sends a command request, and the HSS sends to the AS the public user identity information linked to the same Service Profile according to the received command request. Or, the HSS initiatively notifies the AS if the public user identity information linked to the same Service Profile to be aware of by the AS is changed in the HSS, for example the HSS needs to initiatively notify the corresponding change according to the subscription of the AS. Or, the AS receives the message sent by the S-CSCF and obtains the public user identity information linked to the same Service Profile from the message.

### (1) The process of being aware of the corresponding information according to the request of the AS

If the AS needs to be aware of the public user identities linked to the same Service Profile and the related data is not saved locally, the AS can query the HSS for the data using a User Data Request (UDR), and the HSS sends a User Data Answer (UDA) message containing other public user identities linked to the same Service Profile as the public user identity contained in the UDR request.

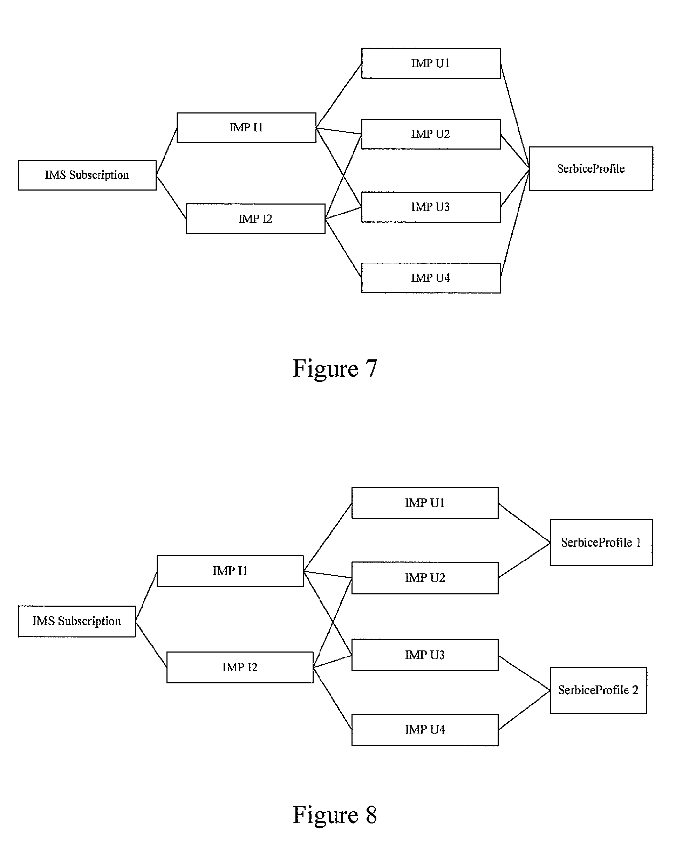

More particularly, the process of being aware of the public user identities related to the same Service Profile from the HSS according to the request of the AS includes the following.
(11) If the AS requires the HSS to send the public user identities linked to the same Service Profile, the AS extends the range of the value of Data-Reference in the existing UDR request; the UDR request contains the IMPU and the Data-Reference, the value of the Data-Reference is a value newly added to implement the technical scheme of the present invention.
(12) Upon receiving the UDR request, the HSS determines, according to the value of Data-Reference, that the UDR request is to query for the public user identities linked to the same Service Profile, and finding the Service Profile based on the public user identity index contained in the UDR request so as to find other public user identities linked to the same Service Profile.
(13) The HSS sends the found public user identity information to the AS, in more detail, this process includes:
   (131) if the HSS only needs to send the public user identities linked to the same Service Profile as that contained in the UDR request, the HSS adds the IMPU found in (12) into to the message, and sends the message to the AS;
   (132) if the HSS only needs to send the public user identities linked to the same private user identity as that contained in the UDR request, the HSS should further determine the private user identities linked to the other public user identities found linked to the Service Profile in (12), adds only the public user identities linked to the same private user identity as that contained in the UDR request to the message, and sends the message to the AS; and the added private user identities may be found according to the public user identity contained in the UDR request.
      In (132), it should be noted that, if the public user identity contained in the UDR request is a shared public user identity, i.e. it is linked to multiple private user identities simultaneously, such as IMPU2 and IMPU3 shown in Figure 7 and Figure 8, (132) can be performed by the following manners.
      (1321) If the public user identity contained in the UDR request is a shared public user identity and there are different public user identities linked to different private user identities from that contained in the UDR request but to the same Service Profile, such as IMPU1 and IMPU4 in Figure 5, the HSS sends to the AS an error message to indicate a failure of search because the public user identity information to be sent can not be determined in this case; otherwise, the HSS sends an IMPU linked to the same Service Profile as the IMPU in the UDR request, for example, in Figure 6, the HSS sends a response containing IMPU4 if the UDR request contains IMPU3;
      (1322) If the public user identity contained in the UDR request is a shared public user identity and there are different public user identities linked to different private user identities from that contained in the UDR request but to the same Service Profile, such as IMPU1 and IMPU4 in Figure 5, the HSS may randomly select and send an IMPU linked to the same IMPI as the IMPU in the UDR request, for example sends any one of IMPU1 and IMPU4; otherwise, the HSS sends an IMPU linked to the same Service Profile as the IMPU in the UDR request, for example, in Figure 6, the HSS sends a response containing IMPU4 if the UDR request contains IMPU3;
      (1323) If the public user identity contained in the UDR request is a shared public user identity and there are different public use identities linked to different private user identities from that contained in the UDR request but to the same Service Profile, such as IMPU1 and IMPU4 in Figure 5, the HSS may send all related IMPUs, for example sends IMPU1 and IMPU4 simultaneously; otherwise, the HSS sends an IMPU linked to the same Service Profile as the IMPU in the UDR request, for example, in Figure 6, the HSS sends a response containing IMPU4 if the UDR request contains IMPU3;
      (1324) The existing Sh interface is extended, and is allowed to transfer the private user identify; the UDR request is extended and is required to contain the private user identity and the public user identity simultaneously while a user's IMPUs linked to the same Service Profile is requested; thereby, the HSS can determine the IMPUs to be sent according to the private user identity in the UDR request if the public user identity contained in the UDR request is a shared public user identity.

### (2) The process of the AS to be aware of the public user identities linked to the same Service Profile from the message sent by the HSS initiatively

Modification of SNR command also is involved in the change of the Sh interface between the AS and the HSS, i.e. allow the AS to subscribe to a notification. If the public user identities linked to the same Service Profile as that in the UDR request are changed, the AS may be aware of the change from the message sent by the HSS initiatively.

More particularly, the process of the AS to be aware of the public user identities linked to the same Service Profile from the message sent by the HSS initiatively includes the following.
(21) The value range of parameter Data-Reference of the existing SNR command is extended, the extended value is equal to the extended one as in UDR request. Upon receiving the SNR command, the HSS determines, according to the value of the Data-Reference in the SNR command that the command is to subscribe/cancel a modify notification of the public user identities linked to the same Service Profile as that in the SNR command;
   More particularly, (21) includes the following:
   The HSS determines that the AS subscribes to the change notification of the public user identity linked to the same Service Profile as that contained in the SNR request;
   If the HSS requires that the AS is only allowed to subscribe to the public user identity linked to the same private user identity as that contained in the SNR request, the HSS further check the private user identity linked to other public user identities of the corresponding Service Profile so as to determine that the AS only subscribes to the change notification of the public user identity linked to the same private user identity as that in the SNR request.

   It should be noted that, if the public user identity contained in the SNR request received by the HSS is a shared public user identity, i.e. the public user identity is linked to multiple private user identities simultaneously, (21) is performed by the HSS in the following manners:
   The HSS sends an error to the AS to indicate a failure of the subscription if the HSS finds the public user identity contained in the SNR request is a shared public user identity;
   The HSS regards that the AS has subscribed to a change notification of all public user identities linked to each private user identity and linked to the same Service Profile as that contained in the SNR request;
   The existing SNR request is extended and is required to contain the private user identity and the public user identity simultaneously in the SNR request, so that the HSS may determine the change notification of public user identity subscribed to by the AS according to the private user identity of the SNR request.

(22) After the AS subscribes to the notification using the SNR command, the HSS needs to send a message to notify the AS through a Push-Notification-Request (PNR) command.

The PNR command contains two parameters, User-Identity and User-Data. The User-Identity contains the public user identity subscribed to in the SNR request and the node contains the updated data, which includes a keyword uniquely identifying the data such as Data-Reference, and contains the public user identities linked to the same Service Profile as that in the SNR command,

If there is no public user identity linked to the same Service Profile as that in the SNR request after the data being changed, the public identity node of the Notify message does not contain any public user identity.

### (3) The AS is aware of the corresponding information using the message received from the S-CSCF

In (3), the AS obtains the public user identity information linked to the same Service Profile from the message received from the S-CSCF.
(31) If the AS also subscribes to the registration event (i.e. reg-event) notification via the third party registration during the registration of the user, the S-CSCF may add the public user identity linked to the same Service Profile obtained from the SAA to the Notify message of the reg-event, and transfers the notification message to the AS via the ISC interface between S-CSCF and AS; upon receiving the Notify message, the AS will obtain other public user identities linked to the same Service Profile as each public user identity of the Notify message.
   At the same time, upon receiving the PPR request, the S-CSCF sends a Notify message to the AS via the ISC interface if the S-CSCF finds the public user identity linked to the same Service Profile is changed and the AS has subscribed to the reg-event notification, the Notify message containing the public user identity linked to the same Service Profile as every public user identity. Upon receiving the Notify message, the AS will obtain the other public user identities which are modified and linked to the same Service Profile as every public user identity in the Notify message.
   The S-CSCF adds the public user identity linked to the same Service Profile as the user to the Notify message, which may be performed by:
   extending the XML Schema of the ISC interface, and adding a cell to each registration node; the cell contains one or more public user identities which are public user identities linked to the same Service Profile and the same private user identity as that in the registration aor record and which include the public user identities in the implicit register set.
(32) If the AS does not subscribe to reg-event notification, the existing Session Initial Protocol (SIP) is extended and a new SIP header domain is defined to contain the public user identities linked to the same Service Profile. Therefore, the S-CSCF may use the new header domain in the third party registration message to contain other public user identities linked to the same Service Profile as the public user identity initiating the registration.
   Third, the process of the UE to be aware of the public user identities linked to the same Service Profile

Because the UE does not communicate with the HSS directly, the UE needs to be aware of the public user identities linked to the same Service Profile via the S-CSCF communicating with the HSS directly.

During the registration of the UE, the S-CSCF obtains the public user identities linked to the same Service Profile of the user upon downloading the user data using the SAR. Because the user will send a notification of subscription of a reg-event to the S-CSCF upon receiving the 200 OK response of register request, the S-CSCF may add the information to be aware of by the UE to the Notify message of the reg-event and transfers the Notify message to the UE via the Gm interface (between UE and Proxy CSCF). Upon receiving the Notify message, the UE will obtain other public user identities linked to the same Service Profile as every public user identity in the Notify message.

At the same time, upon receiving the PPR request, the S-CSCF sends to the UE a Notify message containing the public user identity linked to the same Service Profile as each public user identity via the Gm interface if the S-CSCF finds the public user identity linked to the same Service Profile is changed and the UE has subscribed to the reg-event notification. The UE will obtain other changed public user identities linked to the same Service Profile as each public user identity in the message upon receiving the Notify message.

The S-CSCF adds the public user identity linked to the same Service Profile as the user to the Notify message, which may be implemented by:
extending the XML Schema of Mw interface (between S-CSCF and P-CSCF) and Gm interface, and adding a cell to each registration node, where the cell contains one or more public user identities which are public user identities linked to the same Service Profile and private user identity as the public user identity in the registration aor record and which include the public user identity in implicit register set.

The technical scheme of the present invention is described above, and specific embodiments of the present invention will be further described in detail below.

### Embodiment 1

The XML Schema of Cx interface with a newly added node is indicated in Table 1. The newly added GroupPublicldentity node contains the public user identity linked to the same Service Profile and private user identity as that of the PublicIdentity node but not belonging to the same implicit register set as that of the PublicIdentity node, which is shown in Table 1.

**Table 1**

| Data type | Tag | Compound of | | |
|---|---|---|---|---|
| | | Tag | Type | Cardinality |
| tIMSSubscription | IMSSubscription | PrivateID | tPrivateID | 1 |
| | | Service Profile | tService Profile | (1 to n) |
| tServiceFrofile | Service Profile | PublicIdentity | tPublicIdentity | (1 to n) |
| | | InitialFilterCriteria | tInitialFilterCriteria | (0 to n) |
| | | CoreNetworkServices Authorization | CoreNetworkService esAuthorization | (0 to 1) |
| | | SharedIFCSetID | tSharedIFCSetID | (0 to n) |
| | | GroupPublicIdentity/ | tGroupPublicIdentity | (0 to 1) |
| tGroupPublicIdentity | GroupPublicIdentity | Publicldentity | tPublicIdentity | (1 to n) |
| tCoreNetworkServic esAuthorization | CoreNetworkServ icesAuthorization | SubscribedMediaProf ileld | tSubscribedMediaP rofileld | (0 to 1) (0 to 1) |
| tPublicIdentity | PublicIdentity | BarringIndication | tBool | 1 |
| | | Identity | tIdentity | 1 |
| tInitialFilterCriteria | InitialFilterCriteria | Priority | tPriority | 1 |
| | | TriggerPoint | tTrigger | (0 to 1) |
| | | ApplicationServer | tApplicationServer | 1 |
| | | ProfilePartlndicator | tProfilePartIndicator | (0 to 1) |

NOTE: Table 1 only lists the related changed part but not all.

### Embodiment 2

In the IMS subscription shown in Figure 5, IMPU1, IMPU2, IMPU3 and IMPU4 are linked to the same Service Profile and are linked to IMPI1 and IMPI2 respectively; IMPU2 and IMPU3 belong to the same implicit register set; if IMPU1 initiates the registration, the public user identities contained in the newly added node of Service Profile of SAA message are IMPU2 and IMPU3; if IMPU2 or IMPU3 initiates the registration via IMPI1, the public user identity contained in the newly added node of Service Profile of SAA message is IMPU1; if IMPU4 initiates the registration, the public user identities contained in the newly added node of Service Profile of SAA message are IMPU2 and IMPU3.

By taking IMPU1 as an example, the content of the Service Profile in the SAA message in an XML format is as follows.

```
 <?xml version=" 1.0" encoding="UTF-8"?>
 <IMSSubscriptionxmlns:xsi="http://ww.w3.org/2001/XMLSchema-instance"
 xsi:noNamespaceSchemaLocation-"D:\ \CxDataType.xsd">
        <PrivatelD>IMPI1@homedomain.com</PrivateID>
        <Service Profile>
            <PublicIdentity>
             <Identity> sip:IMPU1@homedomain.com </Identity>
            </Publicidentity>
             <GroupIdentity> //the start of group public identity description, the group
 contains two public user identities, one is sip:IMPU2@homedomain.com
                <PublicIdentity> //the other is sip:IMPU3@homedomain.com
                  <Identity>sip:IMPU2@homedomain.com</Identity>
            </PublicIdentity> //the description of the first public user identity is finished
            <PublicIdentity>
               <Identity>sip:IMPU3@homedomain.com</Identity>
             </PublicIdentity> //the description of the second public user identity is finished
            </GroupIdentity>         //the description of group public identity is finished
       </Service Profile>
 </IMSSubscription>
```

### Embodiment 3

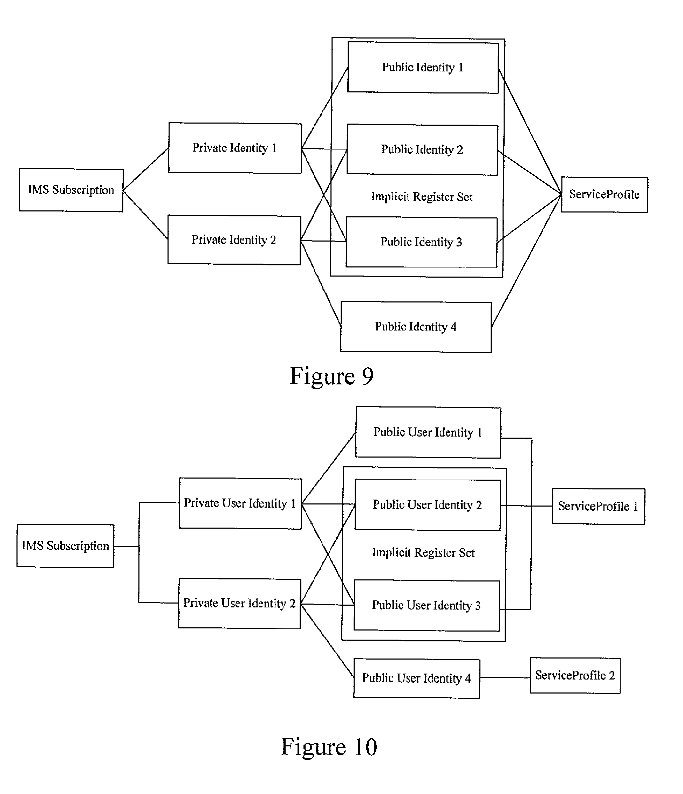

Referring to Figure 9, if IMPU1 joins the implicit register set of IMPU2 and IMPU3, the HSS needs to send a PPR request to notify the S-CSCF to update the saved data of IMPU1, IMPU2 and IMPU3. The content of the Service Profile in the PPR request sent by the HSS in an XML format is as follows:

```
 <?xml version="I.0" encoding="UTF-8"?>
 <IMSSubscriptionxmlns:xsi="http://www.w3.org/2001/XMLSchema-instance"
 xsi:noNamespaceSchemaLocation="D:\ \CxDataType.xsd">
       <PrivateID>IMPI1@homedomain.com</PrivateID>
       <Service Profile>
            <PublicIdentity>
             <Identity> sip:IMPU1@homedomain.com </Identity>
             </PublicIdentity>
             <PublicIdentity>
               <Identity>sip:IMPU2@homedomain.com</Identity> //IMPU2 joins the
 implicit register set contained in the PublicIdentity node
             </PublicIdentity>
             <PublicIdentity>
              <Identity>sip:IMPU3@homedomain.com</Identity> //IMPU3 joins the
 implicit register set contained in the PublicIdentity node
            </PublicIdentity>
             <GroupIdentity> // no other public user identity linked to the same Service
 Profile and belonging to the same implicit register set as IMPU2 and IMPU3
             </GroupIdentity>
       </Service Profile>
 </IMSSubscription>
```

### Embodiment 4

In the IMS subscription shown in Figure 10, the AS requests the public user identity linked to the same Service Profile as IMPU2 using the UDR request, and the HSS sends to the AS IMPU1 and IMPU3. The detailed message format is as follows:

```
 <?xml version="1.0" encoding="UTF-8"?>
 <IMSsubscriptionxmlns:xsi="http://www.w3.org/2001/XMLschema-instance"
 xsi:noNamespaceSchemaLocation="D:\ \CxDataType.xsd">
       <PrivateID>IMPI1 @homedomain.com</PrivateID>
       <UserData>
            <PublicIdentity>
               <Identity>sip:IMPU1@homedomain.com</Identity> //send public user
 identity IMPU1 linked to the same Service Profile as IMPU2
              </PublicIdentity>
              </PublicIdentity>
               <Identity>sip:IMPU3@homedomain.com</Identity> //send public user
 identity IMPU3 linked to the same Service Profile as IMPU2
            </PublicIdentity>
            </UserData>
```

### Embodiment 5

Referring to Figure 6, the Service Profile to which IMPU4 is related is modified as Service Profile2 but still belongs to the same implicit register set as IMPU3, the HSS needs to first send a PPR request to delete IMPU4 from the public user identity set linked to IMPU5, send a PPR request to add IMPU4 into the public user identity set linked to IMPU2, and send two PPR requests to update the Service Profile of IMPU4 which is respectively linked to IMPI1 and IMPI2.

The Service Profile in the XML format in a first PPR request is as follows, including deleting IMPU4 from the Group to which IMPU5 is related.

```
 <?xml version="1.0" encoding="UTF-8"?>
 <IMSSubscriptionxmlns:xsi="http://www.w3.org/2001/XMLSchema-instance"
 xsi:noNamespaceSchemaLocation="D:\ \CxDataType.xsd">
       <PrivateID>IMPI2@homedomain.com</PrivateID>
       <Service Profile>
           <PublicIdentity>
             <Identity> sip:IMPU5@homedomain.com </Identity>
           <IPublicIdentity>
             <GroupIdentity>
         <PublicIdentity> //the public user identity linked to Private User Identity 2 and the
 same Service Profile as IMPU5 is IMPU3
             <Identity> sip:IMPU3@homedomain.com </Identity>
             <PublicIdentity>
            </GroupIdentity>
       </Service Profile>
      <Service Profile>
           <PublicIdentity>
             <Identity> sip:IMPU6@homedomain.com </Identity>
           </PublicIdentity>
      </Service Profile>
 </IMSSubscription>
```

The Service Profile in the XML format in a second PPR request is as follows, including adding IMPU4 to the Group to which IMPU2 is related.

```
 <?xml version="1.0" encoding="UTF-8"?>
 <IMSSubscriptionxmlns:xsi="http://www.w3.org/2001/XMLSchema-instance"
 xsi:noNamespaceSchemaLocation-"D:\ \CxDataType.xsd">
       <PrivateID>IMPI1 @homedomain.com</PrivateID>
       <Service Profile>
           <PublicIdentity>
             <Identity> sip:IMPU2@homedomain.com </Identity>
           </PublicIdentity>
             <GroupIdentity>
       <PublicIdentity> // there are other public user identities linked to Private User
 Identity 1 and the same Service Profile as IMPU2
             <Identity> sip:IMPU4@homedomain.com </Identity>
            </PublicIdentity>
             </GroupIdentity>
       </Service Profile>
      <Service Profile>
            <PublicIdentity>
            <Identity> sip:IMPU1@homedomain.com </Identity>
            </PublicIdentity>
               ...
      </Service Profile>
 <IMSSubscription>
```

The Service Profile in the XML format in a third PPR request is as follows. Because IMPU3 and IMPU4 are SharedIMPUs, IMPU4 is deleted from the Group to which IMPU3 is related for Private User Identity 1, and IMPU2 information is added to the Group of IMPU4.

```
 <?xml version=" 1.0" encoding="UTF-8"?>
 <IMSSubscriptionxmlns:xsi="http://www.w3.org/2001/XMLSchema-instance"
 xsi:noNamespaceSchemaLocation="D:\ \CxDataType.xsd">
       <PrivateID>IMPI1@homedomain.com</PrivateID>
       <Service Profile>
            <PublicIdentity>
             <Identity> sip:IMPU3@homedomain.com </Identity>
            </PublicIdentity>
             <GroupIdentity> // there is no other public user identity linked to Private User
 Identity 1 and the same Service Profile as IMPU3

             </GroupIdentity>

       </Service Profile>
      <Service Profile>
            <PublicIdentity>
             <Identity> sip:IMPU4@homedomain.com </Identity>
            </PublicIdentity>
             <GroupIdentity>
             <PublicIdentity> // there is public user identity IMPU2 which is linked to
 Private User Identity 1 and the same Service Profile as IMPU4
            <Identity> sip:IMPU2@homedomain.com </Identity>
            </PublicIdentity>
             </GroupIdentity>
      </Service Profile>
 </IMSSubscription>
```

The Service Profile in the XML format in a fourth PPR request is as follows. Because IMPU3 and IMPU4 are SharedIMPUs, IMPU4 is deleted from the Group to which IMPU3 is related for Private User Identity 1 (IMPU5 is still kept), and IMPU5 is deleted from the Group to which IMPU4 is related.

```
 <?xml version="1.0" encoding="UTF-8"?>
 <IMSSubscriptionxmlns:xsi="http://www.w3.org/2001/XMLSchema-instance"
 xsi:noNamespaceSchemaLocation="D:\\CxDataType.xsd">
       <PrivateID>IMPI2@homedomain.com</PrivateID>
       <Service Profile>
            <PublicIdentity>
             <Identity> sip:IMPU3@homedomain.com </Identity>
            </PublicIdentity>
             <GroupIdentity>                  //the group member linked to private
 user identity 2
             <PublicIdentity>
             <Identity>sip:IMPU5@homedomain.com</Identity> //the public user
 identity linked to the same Service Profile
             </PublicIdentity>
             </GroupIdentity>

       </Service Profile>
      <Service Profile>
            <PublicIdentity>
             <Identity> sip:IMPU4@homedomain.com </Identity>
            </PublicIdentity>
             <GroupIdentity> // there is no other public user identity linked to private user
 identity 2 and the same Service Profile as IMPU4
             </GroupIdentity>
      </Service Profile>
 </IMSSubscription>
```

### Embodiment 6

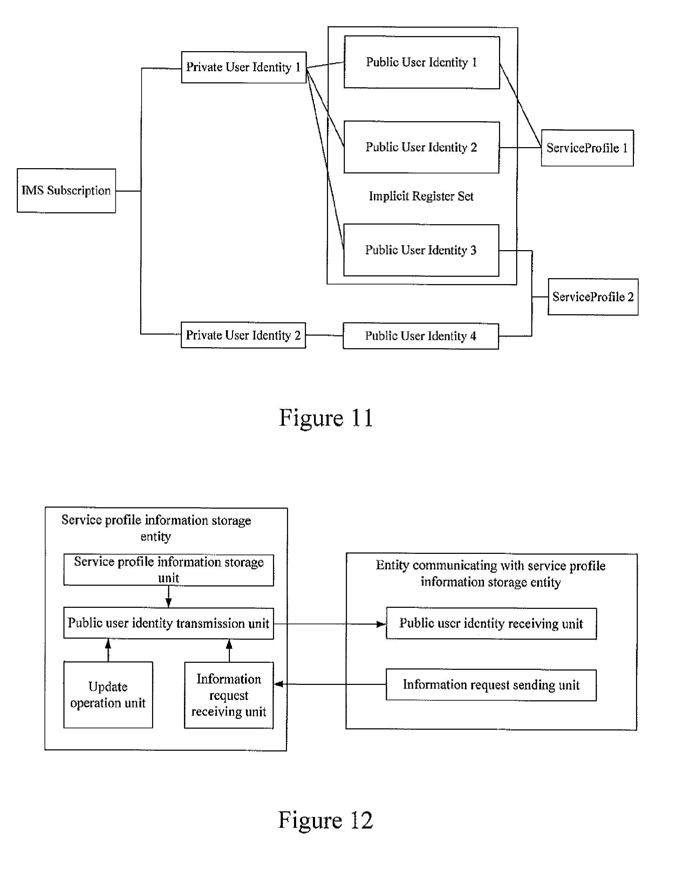

Referring to Figure 11, IMPU1 subscribes to the reg-event notification during the registration; the S-CSCF sends to the UE a Notify message containing the public user identity linked to the same Service Profile as each IMPU.

If there is no further restriction, the S-CSCF may send the public user identity linked to the same Service Profile crossing IMPI; the Notify message content is as follows:

```
      NOTIFY sip: IMPU1@homedomain.com;opaque=hha9s8d-999a SIP/2.0
      From: <sip:IMPU1 @homedomain.com>;tag=27182
      To: <sip:IMPU1@homedomain.com>;tag=262281
      Subscription-State: active;expires=3600
      Event: reg
      Content-Type: application/reginfo+xml
      Contact: <sip:registrar.homedomain.com>
      Content-Length: (...)
      <?xml version=" 1.0"?>
           <reginfo xmlns="urn:ietf:params:xml:ns:reginfo"
                xmlns:xsi="http://www,w3.org/2001/XMLSchema-instance"
                version="1" state="full">
              <registration aor="sip:IMPU1@homedomain.com" id="a7"state="active">
                <contact id="92" state="active" event="registered"duration-registered="1"
 expires="3599">
                      <uri>
                          sip:ua.example.com
                      </uri>
                <contact>
                <GroupIdentity>
                 <uri>sip:IMPU2@homedomain.com</uri> //there is the public
 user identity IMPU2 linked to the same Service Profile as IMPU1
               </GroupIdentity>
              </registration>
              <registration aor="sip:IMPU2@homedomain.com" id="a8" state="active">
                <contact id="93" state="active" event="created"
                    duration-registered="1" expires="3599">
                       <uri>
                          sip:ua.example.com
                       </uri>
                </contact>
                <GroupIdentity>
                  <uri>sip:IMPU1@homedomain.com</uri> //there is the public
 user identity IMPU1 linked to the same Service Profile as IMPU2
                 </GroupIdentity>
              </registration>
              <registration
                   aor-"sip:IMPU3@homedomain.com;user=phone"id="a9"state="active >
                 <contact id="94" state="active" event-"created" duration-registered="1"
 expires="3599">
                      <uri>
                          sip:ua.example.com
                      </uri>
                </contact>
              <GroupIdentity>
                 <uri>sip:IMPU4@homedomain.com</uri> //there is the public user
 identity IMPU4 linked to the same Service Profile as IMPU3
              </GroupIdentity>
             registration>
           </reginfo>
```

If the S-CSCF is required to only send the IMPU linked to the same Service Profile and the same private user identity, the content of the Notify message is as follows:

```
      NOTIFY sip: IMPU1@homedomain.com;opaque=hha9s8d-999a SIP/2.0
      From: <sip:IMPU1@homedomain.com>;tag=27182
      To: <sip:IMPU1@homedomain.com>;tag=262281
      Subscription-State: active;expires=3600
      Event: reg
      Content-Type: application/reginfo+xml
      Contact: <sip: registrar.homedomain.com>
      Content-Length: (...)
      <?xml version-" 1.0"?>
           <reginfo xmlns="urn:ietf:params:xml:ns:reginfo"
                xmlns:xsi="http://www.w3.org/2001/XMLSchema-instance"
                version-"1"state-"full">
             <registration aor="sip:IMPU1 @homedomain.com" id="a7"state="active">
                <contact id="92" state="active" event="registered"duration-registered="1"
 expires="3 599">
                      <uri>
                          sip:ua.example.com
                      </uri>
                </contact>
                <GroupIdentity>
                 <uri>sip:IMPU2@homedomain.com</uri> //there is the public
 user identity IMPU2 linked to the same Service Profile as IMPU1
              <IGroupIdentity>
             </registration>
             <registration aor="sip:IMPU2@homedomain.com" id="a8" state="active">
                <contact id="93" state="active" event="created"
                   duration-registered="1" expires="3599">
                      <uri>
                          sip:ua.example.com
                      </uri>
                </contact>
 <GroupIdentity>
                 <uri>sip:IMPU1@homedomain.com</uri> //there is the public
 user identity IMPU1 linked to the same Service Profile as IMPU2
                </GroupIdentity>
             </registration>
     <registration aor="sip:IMPU3@homedomain.com;user=phone"id="a9"state="active">
     <contact id="94" state="active" event="created" duration-registered="1"
 expires="3599">
                      <uri>
                          sip:ua.example.com
                      </uri>
                </contact>
              </registration>
           </reginfo>
```

The method of the present invention may be implemented by the following manners.

The method for dividing users into groups according to the Service Profile in accordance with the present invention may include:
(1) introducing a newly added attribute value into the Service Profile, where one such attribute value for one Service Profile is enough and the newly added attribute value can identify one Service Profile effectively;
(2) extending the existing XML Schema by the HSS while organizing the Service Profile data transferred via the Cx interface, introducing a new node into the XML text transferred via the Cx interface; where one such node for one Service Profile is enough and the node contains the newly added attribute value for exclusively identifying the Service Profile as a Service Profile identity;
(3) upon downloading the user data from the HSS using an SAR request, the S-CSCF can find the corresponding Service Profile according to the newly added attribute value, and further determine the public user identity information linked to the same Service Profile;
(4) if the public user identity linked to the same Service Profile in the HSS is changed and it is necessary to notify the S-CSCF to perform the data synchronization modification, the HSS needs to send to the S-CSCF a PPR request which contains the above newly added attribute value for exclusively identifying the Service Profile and the updated Service Profile information; upon receiving the PPR request, the S-CSCF overlaps the Service Profile data of the public user identity contained in the PublicIdentity node of the Service Profile corresponding to the attribute value of the message with the updated Service Profile data of the message; therefore, the S-CSCF saves the latest Service Profile information so as to reliably determine the public user identity information linked to any Service Profile.

In the present invention, if the UE and AS subscribe to the reg-event notification, the S-CSCF also needs to add the public user identity obtained by the above processes to the Notify message and send the Notify message to the UE and AS during the registration. Upon receiving the Notify message, the UE and AS obtains other public user identities linked to the same Service Profile as each public user identity contained in the Notify message.

More specifically, upon receiving the PPR request, the S-CSCF sends to the UE and AS a Notify message containing the public user identity linked to the same Service Profile as each public user identity via the Gm and ISC interface. Upon receiving the Notify message, the UE and AS will obtain the other modified public user identities linked to the same Service Profile as each public user identity contained in the message. The S-CSCF adds a public user identity linked to the same Service Profile to the Notify message in the following manner:
extending the XML Schema of the Mw, Gm and ISC interfaces, and adding a cell to each registration node, where the cell contains one or more public user identities which are public user identities linked to the same Service Profile and private user identity as that in the registration aor record and which include the public user identity of the implicit register set. If the UE and AS do not subscribe to the reg-event notification, the above process may be implemented by extending the SIP protocol.

In the above process, if the UDR, SNR and PNR command of Sh interface need be modified, the process may refer to the above description of extending corresponding command, which will not be further described in detail herein.

Embodiments of the present invention further provide a system for being aware of the public user identity of the Service Profile in the communication system. Refer to Figure 12, the system is arranged in the communication network providing multimedia services and includes:
a Service Profile storage entity adapted to send, to an entity communicating with the Service Profile storage entity, information of at least one public user identity which is contained in the Service Profile information saved in itself and is linked to the same Service Profile; and the entity communicating with the Service Profile storage entity adapted to receive the information sent by the Service Profile storage entity, and the received information contains at least one public user identity linked to the same Service Profile.

The Service Profile storage entity includes a device adapted to be aware of a public user identity of a Service Profile in the communication system. The first device can be arranged in the HSS and include:
a Service Profile information storage unit adapted to store the Service Profile information;
a public user identity transmission unit adapted to transmit to the entity communicating with the Service Profile storage entity at least one public user identity which is contained in the Service Profile information stored in the Service Profile information storage unit and is linked to the same Service Profile.

The device further includes:
an update operation unit adapted to trigger the public user identity transmission unit to transmit updated information to an entity which communicates therewith and subscribes to a change event after public user identity information linked to the same Service Profile is updated; or
an information request receiving unit adapted to receive a request of an entity communicating therewith, and trigger the public user identity transmission unit to transmit the requested public user identity information linked to the same Service Profile to the entity sending the request.

The entity communicating with the Service Profile storage entity includes:
a device adapted to be aware of the public user identity of Service Profile in the communication system.

The device may be arranged in the S-CSCF and/or AS and include:
a public user identity receiving unit adapted to receive the information sent by the Service Profile storage entity, the information containing at least one public user identity linked to the same Service Profile;
an information request sending unit adapted to send a request message to request obtaining at least one public user identity linked to the same Service Profile to the Service Profile storage entity.

It should be noted that, in the above system, the process for transferring at least one public user identity linked to the same Service Profile between the Service Profile storage entity and the entity communicating with the Service Profile storage entity is described before in detail, and there is no more description.

To sum up, in embodiments of the present invention, the AS, S-CSCF and UE may be aware of the public user identity linked to the same Service Profile, and perform the corresponding operation based on the aware information, and various requirements of a user for developing services can be satisfied.

The foregoing are only exemplary embodiments of the present invention. The protection scope of the present invention, however, is not limited to the above description. Any change or substitution, within the technical scope disclosed by the present invention, easily occurring to those skilled in the art should be covered by the protection scope of the present invention. Therefore, the protection scope of the present invention should be compatible with the protection scope stated by claims,

## Claims

1. A method for being aware of public user identities linked to a same Service Profile in a communication system, comprising:
in the communication network providing multimedia services,
sending, by a Service Profile storage entity, at least one public user identity stored in the Service Profile storage entity and linked to a same Service Profile; and
obtaining, by an entity communicating with the Service Profile storage entity, the at least one public user identity linked to the same Service Profile from the Service Profile storage entity.

2. The method of Claim 1, wherein the Service Profile storage entity comprises a Home Subscriber Server, HSS.

3. The method of Claim 1, wherein the entity communicating with the Service Profile storage entity comprises a Serving-Call Session Control Function entity, S-CSCF, and/or Application Server, AS.

4. The method of Claim 1, wherein the sending at least one public user identity comprises:
sending, by a Home Subscriber Server, HSS, the public user identity information linked to the same Service Profile and a same private user identity to the entity communicating with the HSS; or
sending, by the HSS, all public user identities linked to the same Service Profile to the entity communicating with the HSS; or,
sending, by the HSS, the public user identity information which belongs to a same implicit register set and is linked to the same Service Profile to the entity communicating with the HSS.

5. The method of Claim 1, wherein the public user identity information is contained in an extended message sent to the entity communicating with the Service Profile storage entity.

6. The method of Claim 5, wherein the extended message comprises at least one of: a Server Allocation Answer, SAA, message, a Push Profile Request, PPR, command message, a Push Notification Request, PNR, command message and a User Data request Answer, UDA, command message.

7. The method of any one of Claims 1-6, wherein the sending at least one public user identity to the entity communicating with the Service Profile storage entity comprises:
sending, by the HSS, updated public user identity information which is stored in the HSS and linked to the same Service Profile to an entity which communicates with the HSS and subscribes to a change event initiatively, notifying a change to an entity subscribing to the public user information linked to the Service Profile when the public user identity information linked to the Service Profile of the HSS changes; or,
sending, by the HSS, the public user identity information linked to the same Service Profile to the entity communicating with the HSS according to a request of the entity communicating with the HSS.

8. The method of Claim 7, wherein the process for the entity subscribing to the change event comprises:
notifying the change of each implicit register set to the entity communicating with the HSS if the change of public user identity information linked to the Service Profile of the HSS causes no change between implicit register sets but the change within the implicit register set; and/or,
modifying an implicit register set, and notifying the change of each implicit register set to the entity communicating with the HSS if the change of public user identity information linked to the Service Profile of the HSS causes the change between implicit register sets.

9. The method of Claim 8, wherein notifying the change of each implicit register set comprises:
sending, by the HSS, a message indicating deletion of a public user identity from the implicit register set to a corresponding entity, and sending a message indicating adding a corresponding public user identity to the implicit register set to the corresponding entity.

10. The method of Claim 7, wherein the request of the entity communicating with the HSS comprises: a Server Allocation Request, SAR, request, a User Data Request, UDR, request and/or SNR request.

11. The method of Claim 7, wherein the processing performed by the HSS according to the request of the entity communicating with the HSS comprises:
if a public user identity in the request is shared user identity information, determining all public user identities linked to the same Service Profile as the shared public user identity in the HSS; or
determining all public user identities linked to the same Service Profile as the shared public user identity in the HSS, and determining one public user identity belonging to the same private user identity as the public user identity of the request from said all public user identities; or
determining each public user identity linked to the same Service Profile and the same private user identity as the shared public user identity in the HSS, and sending the determined public user identity to the corresponding entity.

12. The method of Claim 7, wherein the obtaining at least one public user identity linked to the same Service Profile comprises:
receiving, by the S-CSCF, the SAA message sent by the HSS, and obtaining the public user identity information from a public identity node and an extended message node which are contained in the SAA message as all public user identity information linked to the same Service Profile.

13. The method of any of Claims 1-6, further comprising:
sending, by the S-CSCF, the public user identity information linked to the same Service Profile to a user terminal and/or the AS according to a request of the user terminal and/or the AS; or,
sending, by the S-CSCF, the public user identity information linked to the same Service Profile to the user terminal and/or the AS initiatively.

14. The method of Claim 13, wherein the S-CSCF sends the public user identity linked to the same Service Profile to the user terminal and/or the AS using a header domain newly added to a reg-event Notify message or Session Initial Protocol, SIP, message.

15. The method of any of Claims 1-6, further comprising:
sending, by the HSS, a unique Service Profile identity corresponding to the Service Profile to the S-CSCF;
searching, by the S-CSCF, for the public user identity information linked to the Service Profile from the Service Profile information which is saved in the S-CSCF and is indexed by a Service Profile identity according to the unique Service Profile identity.

16. The method of Claim 15, wherein the sending a unique public user identity corresponding to the Service Profile to the S-CSCF comprises:
sending, by the HSS, the unique Service Profile identity corresponding to the Service Profile to the S-CSCF according to a request of the S-CSCF; or,
sending, by the HSS, the unique Service Profile identity corresponding to the Service Profile and the updated Service Profile to the S-CSCF if the Service Profile of the HSS is changed.

17. The method of any of Claims 15, further comprising:
upon receiving the information sent by the HSS, finding, by the S-CSCF, the corresponding Service Profile according to the unique Service Profile identity, and replacing the found Service Profile information by the updated Service Profile included in the information.

18. A device for being aware of a public user identity of a Service Profile in a communication system set in a communication network providing multimedia services, comprising:
a Service Profile information storage unit, adapted to store Service Profile information;
a public user identity transmission unit, adapted to transmit at least one public user identity which is contained in the Service Profile information stored in the Service Profile information storage unit and is linked to a same Service Profile to an entity communicating with the Service Profile storage entity.

19. The device of Claim 18, wherein the device is arranged in the HSS.

20. The device of Claim 18 or 19, further comprising:
an update operation unit, adapted to trigger the public user identity transmission unit to send updated information to an entity which communicates therewith and subscribes to a change event after the public user identity information linked to the same Service Profile is updated; or,
an information request receiving unit, adapted to receive a request of an entity communicating therewith, and trigger the public user identity transmission unit to send the requested public user identity information linked to the same Service Profile to the entity sending the request.

21. A device for being aware of a public user identity of a Service Profile in a communication system set in a communication network providing multimedia services, comprising:
a public user identity receiving unit, adapted to receive information sent by a Service Profile storage entity, the information containing at least one public user identity linked to the same Service Profile.

22. The device of Claim 21, wherein the device is arranged in a Service Call Session Control Function entity, S-CSCF, and/or Application Server, AS.

23. The device of Claim 20 or 21, further comprising:
an information request transmission unit, adapted to transmit a request message to request obtaining at least one public user identity linked to the same Service Profile to the Service Profile storage entity.

24. A system for being aware of a public user identity of a Service Profile in a communication system, comprising:
a Service Profile information storage unit, adapted to send at least one public user identity which is contained in Service Profile information stored in the Service Profile information storage unit and is linked to the same Service Profile;
an entity communicating with the Service Profile storage entity, adapted to receive the information containing at least one public user identity linked to the same Service Profile.
